# EUROPEAN PATENT APPLICATION

(11) **EP 4 790 292 A1**
(43) Date of publication of application: **12.08.2026**
(21) Application number: 25156943.0
(22) Date of filing: 10.02.2025
(51) Int. Cl.: F16L 5/00, H01M 10/6568, H01M 10/613, H01M 10/625, H01M 10/6556, H01M 50/30

(54) **A COOLANT INLET PORT FOR AN ELECTRICAL ENERGY STORAGE PACK ENCLOSURE**

(71) Applicant: Volvo Truck Corporation, 405 08 Göteborg (SE)
(72) Inventor: NICKLASSON, Kristian, 439 55 ÅSA (SE); IRANNEZHAD, Mike, 413 30 GÖTEBORG (SE); KHALILITEHRANI, Mohammad, 413 28 GÖTEBORG (SE)
(74) Representative: Kransell & Wennborg KB

(57) **Abstract**

A coolant inlet port (100) for an electrical energy storage pack enclosure (102), the coolant inlet port comprises: an opening (113) for receiving a coolant pipe (104), and a breather unit (108) arranged in the opening, the breather unit comprises a membrane (110) configured to be arranged at least partly around the coolant pipe in the opening, the membrane is gas permeable and liquid impermeable, and a cover structure (112, 212) arranged to at least partly cover the membrane and part of the coolant pipe at the opening to create a temporary gas trap around the membrane and the cooling pipe.

## Description

### TECHNICAL FIELD

The disclosure relates generally to electrical energy storage systems for vehicles. In particular aspects, the disclosure relates to a coolant inlet port for an electrical energy storage pack enclosure. The disclosure can be applied to heavy-duty vehicles, such as trucks, buses, and construction equipment, among other vehicle types. The disclosure can also be applied to marine applications, passenger cars, and industrial applications. Although the disclosure may be described with respect to a particular vehicle, the disclosure is not restricted to any particular vehicle.

### BACKGROUND

Electrical energy storage systems, such as battery packs, often require sealed enclosures to protect internal components and balance pressure in the enclosure. Breather units are used to allow gas exchange while preventing liquid ingress. However, especially in humid environments, moisture may enter the enclosure, leading to condensation on cooling components, which may cause corrosion or electrical failures. While various solutions exist to manage moisture, there is still room for improvement.

### SUMMARY

According to a first aspect of the disclosure, there is provided a coolant inlet port for an electrical energy storage pack enclosure, the coolant inlet port comprises: an opening for receiving a coolant pipe, and a breather unit arranged in the opening, the breather unit comprises a membrane configured to be arranged at least partly around the coolant pipe in the opening, the membrane is gas permeable and liquid impermeable, and a cover structure arranged to at least partly cover the membrane and part of the coolant pipe at the opening to create a temporary gas trap around the membrane and the cooling pipe.

The first aspect of the disclosure may seek to mitigate the risk of condensation inside the electrical energy storage enclosure. A technical benefit may include reduced risk of failure of the components inside the electrical energy storage enclosure.

More specifically, the temporary gas trap is configured to slow down gas movement near the membrane and the cooling pipe at the coolant inlet port, to allow sufficient time for condensation outside the electrical energy storage enclosure. The temporary gas trap is thus a semi-permanent gas trap that does not prevent escape of air but is configured to at least temporarily trap the gas at or near the membrane and the cooling pipe. That is, a temporary gas trap is configured to hold gas near the membrane and cooling pipe for a time duration such that it can be at least partly dehumidified before entering the enclosure through the membrane. The cover structure thus helps in maintaining the air near the cooling pipe for a longer duration and thus condense more water.

Optionally, in some examples, including in at least one preferred example, the breather unit may be shaped as a torus or as a ring completely encircling the circumference of the coolant pipe. A technical benefit may be that a more uniform air-flow around the coolant pipe is provided which increases the amount of air which is exposed to the coolant pipe in the gas trap, thereby enhancing the dehumidifying efficiency.

Optionally, in some examples, including in at least one preferred example, the coolant inlet port may comprise a first cover structure arranged to at least partly cover a first side of the membrane, and a second cover structure arranged to at least partly cover a second side of the membrane. A technical benefit may be that condensed liquid may be captured on both sides of the membrane. Further, a gas-trapping and dehumidifying effect can be achieved on both sides of the membrane.

Optionally, in some examples, including in at least one preferred example, the first side of the membrane may be oriented to face the exterior of the electrical energy storage pack enclosure, and the second side of the membrane may be oriented to face the interior of the electrical energy storage pack enclosure. Thereby, a clearly defined airflow direction is provided. Furthermore, with a cover structure also inside the electrical energy storage enclosure, unwanted condensation on sensitive components inside the enclosure may be avoided by capturing the condensation in the second cover structure from where it can be drained from the enclosure.

Optionally, in some examples, including in at least one preferred example, the cover structure may be configured as a tapered gas trap. A tapered gas trap means that the space inside the cover structure where the gas is held is tapered. A technical benefit may be that it increases the length of stay of air in the gas trap, consequently allowing for better efficiency in dehumidification.

Optionally, in some examples, including in at least one preferred example, a first cover structure may be oriented with its tapered gas trap apex directed towards the exterior of the electrical energy storage pack, and a second cover structure may be oriented with its tapered gas trap apex directed towards the interior of the electrical energy storage pack. A technical benefit may be that a dual-stage dehumidification is enabled by creating separate tapered gas traps for air exchange.

Optionally, in some examples, including in at least one preferred example, the cover structure may comprise a pipe arranged to surround the coolant pipe and the membrane at the inlet port. Thus, in some examples the cover structure is pipe shaped or cylindrical. A pipe shaped or cylindrical cover structure may provide for a simpler and more cost-efficient construction.

Optionally, in some examples, including in at least one preferred example, the cover structure may comprise a discharge opening to drain liquid away from the coolant pipe. A technical benefit may be that condensed liquid can be drained away from the enclosure to avoid liquid accumulation near the coolant inlet port. This further reduce the risk of corrosion of the coolant inlet port and its components.

Optionally, in some examples, including in at least one preferred example, the membrane may be made from a gas-permeable, liquid-impermeable material, including but not limited to polytetrafluoroethylene (PTFE) or polyethylene (PE), or similar gas-permeable, liquid-impermeable materials. These materials provide efficient gas exchange and long-term durability while preventing liquid ingress in high-humidity environments.

Optionally, in some examples, including in at least one preferred example, the breather unit may be mechanically secured to the coolant pipe. The securing may be by an interference fit or an adhesive sealant. A technical benefit may be that the membrane is maintained near the cooling pipe for efficient dehumidification.

Optionally, in some examples, including in at least one preferred example, the membrane may be arranged to seal against an intermediate element arranged between the coolant pipe and the membrane. A technical benefit may be reduced direct stress on the membrane, increasing durability, and improved mechanical stability.

Optionally, in some examples, including in at least one preferred example, the membrane may be arranged to seal against the coolant pipe. A technical benefit may be that the membrane is maintained near the cooling pipe for efficient dehumidification at the point of air entry. It further provides for a simple sealing solution without additional components.

Optionally, in some examples, including in at least one preferred example, the membrane may conformingly surround the outer surface of the cooling pipe or the intermediate element while maintaining the membrane's structural integrity. A technical benefit may be that the function of the membrane is not compromised since its structural integrity is not altered.

Optionally, in some examples, including in at least one preferred example, the integrity of the membrane is maintained without any perforations in the membrane. A technical benefit may be that unintended leakage may be avoided, and that reliable operation of the membrane may be ensured under varying pressure conditions. Furthermore, avoiding perforations eliminates potential points of failure compared to penetrated membranes.

Optionally, in some examples, including in at least one preferred example, the membrane is elastically deformable and is arranged to conform tightly around the outer surface of the coolant pipe or the intermediate element. The membrane provides a secure seal without penetration of the membrane.

Optionally, in some examples, including in at least one preferred example, the membrane is made from a fire-retardant material. A technical benefit may be improved safety by preventing fire propagation.

Optionally, in some examples, including in at least one preferred example, the coolant inlet port comprises a spark arrestor at the membrane configured to prevent sparks from traveling between the interior and exterior of the enclosure. A technical benefit may that safety is improved by preventing potential ignition sparks from exiting the electrical energy storage enclosure.

There is further provided an electrical energy storage pack comprises an enclosure for housing a set of electrical energy storage cells and a coolant inlet port as described in any of the herein described examples.

Optionally, in some examples, including in at least one preferred example, the electrical energy storage pack further comprises a drainage channel configured to collect and discharge condensed water from the membrane or the coolant pipe.

There is further provided a vehicle comprising the electrical energy storage pack as described in any of the herein described examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1A** is perspective front view of an exemplary coolant inlet port according to an example.
**FIG. 1B** is a cross-section of a coolant inlet port according to an example.
**FIG. 2** is a cross-section of a coolant inlet port according to an example.
**FIG. 3** is a cross-section of a coolant inlet port according to an example.
**FIG. 4** is a cross-section of a coolant inlet port according to an example.
**FIG. 5** is a cross-section of a coolant inlet port according to an example.
**FIG. 6** is a perspective view of an electrical energy storage pack according to an example.
**FIG. 7** illustrates a vehicle according to an example.

### DETAILED DESCRIPTION

The detailed description set forth below provides information and examples of the disclosed technology with sufficient detail to enable those skilled in the art to practice the disclosure.

Electrical energy storage packs are typically airtight and therefore require a breather unit to balance the internal pressure of the enclosure, especially during air transport or extreme elevation changes. However, the breather unit allows air exchange between the electrical energy storage pack and its surroundings, which introduces humid air that can condense on cool components inside the enclosure such as water-cooled thermal plates. This condensation is unwanted and may lead to issues like corrosion and risk of short-circuiting, a problem that is more pronounced in tropical regions with hilly terrain. In such environments, high humidity increases moisture content in the air, while elevation changes create pressure gradients, further increasing air exchange.

The existing solutions involve guiding the condensation within the electrical energy storage pack and discharging it using various technologies.

To improve on existing technologies, the proposed examples disclosed herein provide for dehumidifying the air entering the pack by utilizing the cooling pipes. This advantageously may mitigate the risk of condensation without compromising other features of the electrical energy storage pack.

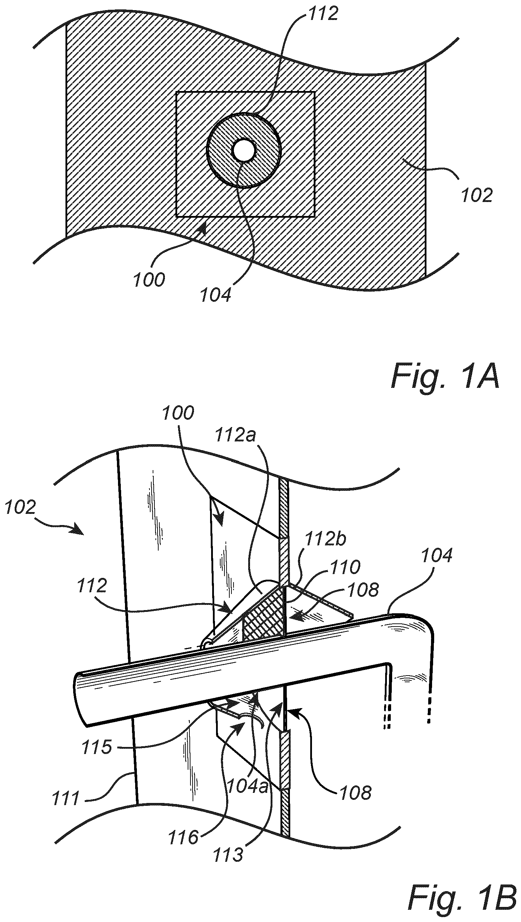

**FIG. 1A** is perspective front view of an exemplary coolant inlet port 100 for an electrical energy storage pack enclosure 102, according to an example. The coolant inlet port 100 is configured to receive a cooling pipe 104 that is arranged to lead cooling fluid from a cooling liquid reservoir to cooling components inside the electrical energy storage pack enclosure 102. The cooling components, such as cooling plates are arranged to cool electrical energy storage cells inside the electrical energy storage pack enclosure 102.

The electrical energy storage pack enclosure 102 is configured to accommodate electrical energy storage cells arranged in series and in parallel as is known in the art. Such cells may be based on various technologies, such as Li-ion technology, for example.

The coolant inlet port 100 further comprises a breather unit and a cover structure 112 arranged to at least partly cover the coolant pipe 106 and a membrane 110 of the breather unit 108, better seen in e.g., fig. 1B.

**FIG. 1B** is a cross-section of the coolant inlet port 100 arranged in a side-wall 111 of the electrical energy storage pack enclosure 102.

The coolant inlet port 100 comprises an opening 113 for receiving the coolant pipe 104. A breather unit 108 is arranged in the opening 113 and comprises a membrane 110 configured to be arranged at least partly around the coolant pipe 104 in the opening 113. The membrane 110 is gas permeable and liquid impermeable. This means that the membrane 110 allows for gas to travel between the outer atmosphere and the inside of the enclosure 102 which enables pressure balancing in the enclosure 102. The membrane 110 may be made from various similar gas-permeable, liquid-impermeable materials know *per se,* of which polytetrafluoroethylene (PTFE), or polyethylene (PE), serve as examples. Preferably, the membrane 110 is made from a fire-retardant material.

In the example of figs. 1A-B, the membrane 110 is only arranged to partly encircle the circumference of the cooling pipe 104. The membrane 110 does not have to be in contact with the cooling pipe 104, however, it is advantageous to have the membrane 110 close to the cooling pipe 104 to increase the dehumidification effect of the air that passes through the membrane 110.

The cover structure 112 is arranged to at least partly cover the membrane 110 and part 104a of the coolant pipe 104 at the opening 113 to create a temporary gas trap 115 around the membrane 110 and the cooling pipe 104. The temporary gas trap 115 is configured to temporarily trap gas, more specifically air, to ensure interaction with the cooling pipe part 104a before passing through the membrane 110. In other words, the gas trap 115 is configured to slow down air such that dehumidification can occur via condensation on the cooling pipe 104a which is cooler than the air in the air trap 15. The cover structure may be made from a rigid material such as a metal or plastic material.

In this example, the cover structure 112 is configured as a tapered gas trap 115. In other words, the space forming the air trap 115 is tapered. The tapered shape increases the length of stay of air inside the air trap 115. A tapered shape may for example be conical although other tapered air trap shapes are also envisaged such as pyramid shapes.

The cover structure 112 comprises a discharge opening 116 to drain liquid away from the coolant pipe 104a and the membrane 110. Condensed liquid that may accumulate inside the conical air trap 115 is advantageously discharge through the opening 116 by gravity. Thus, the opening 116 is preferably located at a low or at the lowest point of the cover structure 112 such that it flows out through the opening 116 by gravity.

Furthermore, a first cover structure 112a is arranged to at least partly cover a first side of the membrane 110 and a second cover structure 112b arranged to at least partly cover a second side of the membrane 110. The sides of the membrane 110 may be opposite sides in the air flow direction. That is, the first side of the membrane 110 is oriented to face the exterior of the electrical energy storage pack enclosure 102 and the second side of the membrane 110 is oriented to face the interior of the electrical energy storage pack enclosure 102. In other words, the first cover structure 112a is arranged on the exterior of the enclosure 102 and the second cover structure 112b is arranged on the interior of the enclosure 102.

The exterior cover structure 112a fully encircles the cooling pipe 104 and is arranged coaxially with the cooling pipe 104. The interior cover structure 112b only covers part of the cooling pipe 104 and does not encircle the cooling pipe 104. The interior cover structure 112b covers only the part of the cooling pipe on the side of the membrane 110 which in this example is only partly arranged around the cooling pipe 104. That is, also the interior cover structure 112b covers the membrane and part of the coolant pipe 104.

The breather unit 108 may comprise additional components such as mounting brackets or other intermediate components. However, regardless, the breather unit 108 may be mechanically secured to the coolant pipe 104a, e.g., by an interference fit or an adhesive sealant. In examples, the membrane 110 is arranged to seal against the coolant pipe 104.

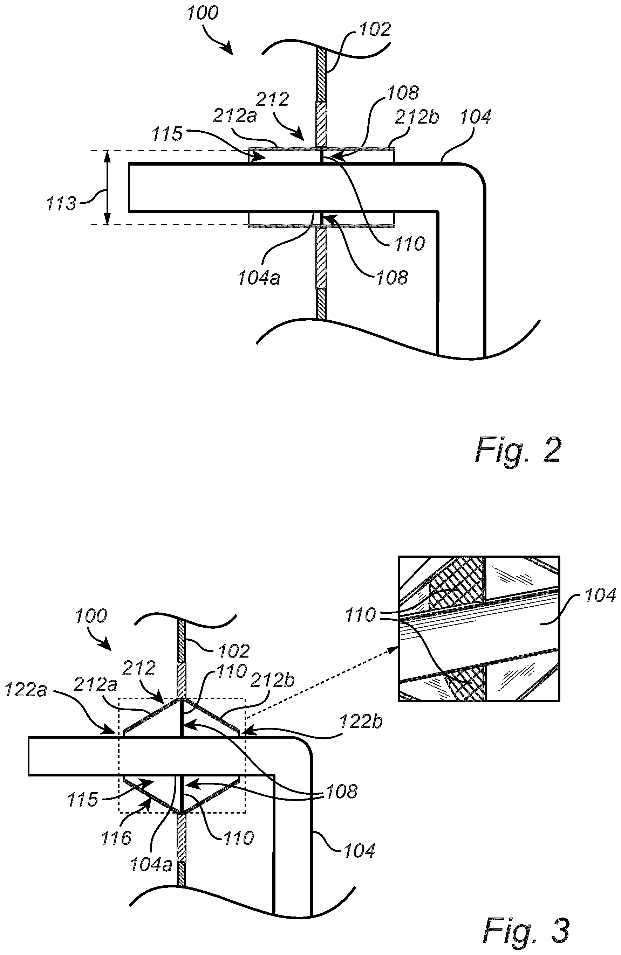

**FIG. 2** is a cross-section of a cooling port 100 according to another example. Here, instead the tapered or conical air trap, the cover structure 212 is a pipe 212 forming a cylindrical air trap 215. The pipe 212 is arranged to surround the coolant pipe 104 and the membrane 110 at the inlet opening 113.

Furthermore, the interior cover structure 212b, or interior pipe 212b is arranged around and coaxial with the cooling pipe 104 as does the exterior pipe 212a.

**FIG. 3** is a cross-section of a cooling port 100 according to another example. Here, the membrane 110 is shaped as a torus or as a ring completely encircling the circumference of the coolant pipe 104.

The membrane 110 is arranged to seal against the coolant pipe 104. Preferably, the membrane conformingly surrounds the outer surface of the cooling pipe 104 while maintaining the membrane's structural integrity, without any perforations in the membrane 110. This may be achieved by the membrane being elastically deformable and to conform tightly around the outer surface of the coolant pipe 104.

Furthermore, first cover structure 120a is oriented with its tapered gas trap apex 122a directed towards the exterior of the electrical energy storage pack enclosure 102 and a second cover structure 120b is oriented with its tapered gas trap apex 122b directed towards the interior of the electrical energy storage pack enclosure 102. In other words, both the interior cover structure 120a and the exterior cover structure 120b are around and coaxial with the cooling pipe 104.

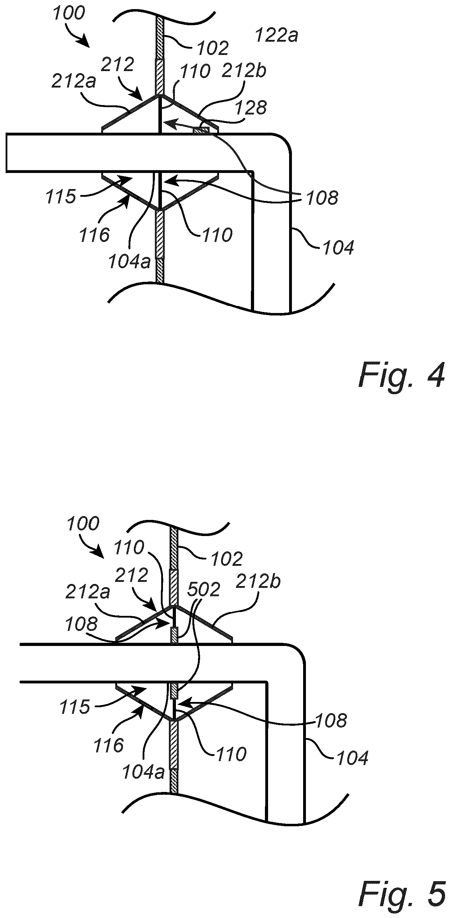

**FIG. 4** is a cross-section of an example cooling inlet port 100. In this example, a spark arrestor 128 is arranged at the membrane 110. The spark arrestor 128 is configured to prevent sparks from travelling between the interior of the enclosure 102 to the exterior of the enclosure 102. A spark arrestor 128 is typically constructed from a metallic mesh screen designed to limit the size of hot exhaust particles expelled during combustion. The spark arrestor traps and extinguishes these particles before they can exit and potentially ignite nearby combustible materials.

**FIG. 5** is a cross-section of an example cooling inlet port 100 in which the membrane 110 is arranged to seal against an intermediate element 502 arranged between the coolant pipe 104 and the membrane 110. The intermediate element 502 may be comprised in the breather unit 108.

In this example, the membrane 110 conformingly surrounds the outer surface of the intermediate element 502 while maintaining the membrane's 110 structural integrity, preferably without any perforations in the membrane 110. Furthermore, the membrane 110 may be elastically deformable and is arranged to conform tightly around the outer surface of the intermediate element providing a secure seal without penetration through the membrane.

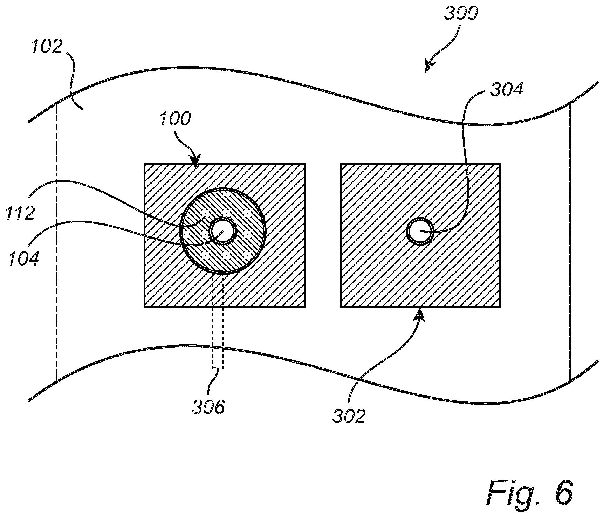

**FIG. 6** is a perspective view of an electrical energy storage pack 300 comprising an enclosure 102 for housing a set of electrical energy storage cells, a coolant inlet port 100 according to anyone of the herein described examples. Furthermore, the electrical energy storage pack 300 comprises a coolant outlet port 302 through which a return line or pipe 304 is arranged.

The electrical energy storage pack 300 comprises a drainage channel 306,such as a pipe or tube configured to collect and discharge condensed water from the membrane or the coolant pipe.

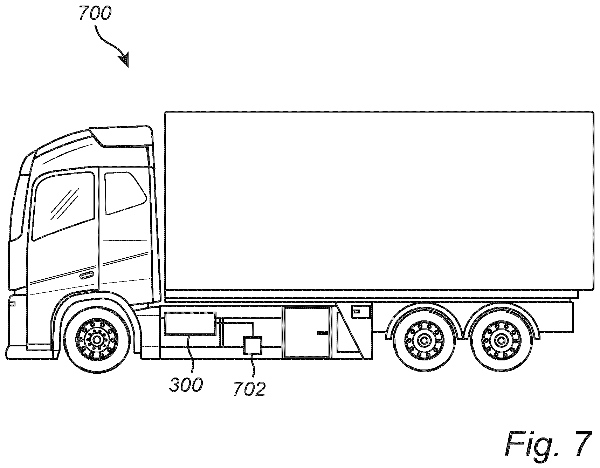

**FIG. 7** illustrates an example vehicle 700 in the form of a truck 700 comprising the electrical energy storage pack 300. The vehicle 700 is preferably an at least partly electrified vehicle such as a hybrid vehicle or a fully electric vehicle comprising at least one electric propulsion machine 702 powered by at least one electrical energy storage pack 300.

Example 1: A coolant inlet port for an electrical energy storage pack enclosure, the coolant inlet port comprises: an opening for receiving a coolant pipe, and a breather unit arranged in the opening, the breather unit comprises a membrane configured to be arranged at least partly around the coolant pipe in the opening, the membrane is gas permeable and liquid impermeable, and a cover structure arranged to at least partly cover the membrane and part of the coolant pipe at the opening to create a temporary gas trap around the membrane and the cooling pipe.

Example 2: The coolant inlet port of example 1, the breather unit being shaped as a torus or as a ring completely encircling the circumference of the coolant pipe.

Example 3: The coolant inlet port of any of examples 1-2, comprising a first cover structure arranged to at least partly cover a first side of the membrane and a second cover structure arranged to at least partly cover a second side of the membrane.

Example 4: The coolant inlet port of example 3, the first side of the membrane is oriented to face the exterior of the electrical energy storage pack enclosure and the second side of the membrane is oriented to face the interior of the electrical energy storage pack enclosure.

Example 5: The coolant inlet port of any of examples 1-4, wherein the cover structure is configured as a tapered gas trap.

Example 6: The coolant inlet port of example 5, wherein a first cover structure is oriented with its tapered gas trap apex directed towards the exterior of the electrical energy storage pack and a second cover structure is oriented with its tapered gas trap apex directed towards the interior of the electrical energy storage pack.

Example 7: The coolant inlet port of any of examples 1-4, the cover structure comprising a pipe arranged to surround the coolant pipe and the membrane at the inlet port.

Example 8: The coolant inlet port of any of examples 1-7, the cover structure comprising a discharge opening to drain liquid away from the coolant pipe.

Example 9: The coolant inlet port of any of examples 1-8, wherein the membrane is made from a gas-permeable, liquid-impermeable material including but not limited to polytetrafluoroethylene (PTFE), or polyethylene (PE).

Example 10: The coolant inlet port of any of examples 1-9, wherein the breather unit is mechanically secured to the coolant pipe.

Example 11: The coolant inlet port of any of examples 1-10, wherein the membrane is arranged to seal against an intermediate element arranged between the coolant pipe and the membrane.

Example 12: The coolant inlet port of any of examples 1-10, wherein the membrane is arranged to seal against the coolant pipe.

Example 13: The coolant inlet port of examples 11 or 12, wherein the membrane conformingly surrounds the outer surface of the cooling pipe or the intermediate element while maintaining the membrane's structural integrity.

Example 14: The coolant inlet port of example 13, wherein the integrity of the membrane is maintained without any perforations in the membrane.

Example 15: The coolant inlet port of any of examples 11 to 14, wherein the membrane is elastically deformable and is arranged to conform tightly around the outer surface of the coolant pipe or the intermediate element.

Example 16: The coolant inlet port of any of examples 1-15, wherein the membrane is made from a fire-retardant material.

Example 17: The coolant inlet port of any of examples 1-16, comprising a spark arrestor at the membrane configured to prevent sparks from travelling between the interior of the enclosure to the exterior of the enclosure.

Example 18: An electrical energy storage pack comprising an enclosure for housing a set of electrical energy storage cells, and a coolant inlet port according to any one of examples 1-17.

Example 19: The electrical energy storage pack of example 18, further comprising a drainage channel configured to collect and discharge condensed water from the membrane or the coolant pipe.

Example 20: A vehicle comprising the electrical energy storage pack according to any of examples 18-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A coolant inlet port (100) for an electrical energy storage pack enclosure (102), the coolant inlet port comprises:
an opening (113) for receiving a coolant pipe (104), and
a breather unit (108) arranged in the opening, the breather unit comprises a membrane (110) configured to be arranged at least partly around the coolant pipe in the opening, the membrane is gas permeable and liquid impermeable, and
a cover structure (112, 212) arranged to at least partly cover the membrane and part of the coolant pipe at the opening to create a temporary gas trap around the membrane and the cooling pipe.

2. The coolant inlet port of claim 1, the breather unit being shaped as a torus or as a ring completely encircling the circumference of the coolant pipe.

3. The coolant inlet port of any of claims 1-2, comprising a first cover structure (112a) arranged to at least partly cover a first side of the membrane and a second cover structure (112b) arranged to at least partly cover a second side of the membrane.

4. The coolant inlet port of claim 3, the first side of the membrane is oriented to face the exterior of the electrical energy storage pack enclosure (102) and the second side of the membrane is oriented to face the interior of the electrical energy storage pack enclosure.

5. The coolant inlet port of any of claims 1-4, wherein the cover structure (112) is configured as a tapered gas trap.

6. The coolant inlet port of claim 5, wherein a first cover structure (120a) is oriented with its tapered gas trap apex (122a) directed towards the exterior of the electrical energy storage pack and a second cover structure (120b) is oriented with its tapered gas trap apex (122b) directed towards the interior of the electrical energy storage pack.

7. The coolant inlet port of any of claims 1-4, the cover structure (112) comprising a pipe (212) arranged to surround the coolant pipe and the membrane at the inlet port.

8. The coolant inlet port of any of claims 1-7, the cover structure comprising a discharge opening (116) to drain liquid away from the coolant pipe.

9. The coolant inlet port of any of claims 1-8, wherein the membrane is made from a gas-permeable, liquid-impermeable material including but not limited to polytetrafluoroethylene (PTFE), or polyethylene (PE).

10. The coolant inlet port of any of claims 1-9, wherein the breather unit is mechanically secured to the coolant pipe.

11. The coolant inlet port of any of claims 1-10, wherein the membrane is arranged to seal against an intermediate element arranged between the coolant pipe and the membrane.

12. The coolant inlet port of any of claims 1-10, wherein the membrane is arranged to seal against the coolant pipe.

13. The coolant inlet port of claims 11 or 12, wherein the membrane conformingly surrounds the outer surface of the cooling pipe or the intermediate element while maintaining the membrane's structural integrity.

14. An electrical energy storage pack (300) comprising an enclosure (102) for housing a set of electrical energy storage cells, and a coolant inlet port according to any one of claims 1-13

15. A vehicle comprising the electrical energy storage pack according to claim 14.
